# EUROPÄISCHE PATENTANMELDUNG

(11) **EP 0 619 429 A1**
(43) Veröffentlichungstag der Anmeldung: **12.10.1994**
(21) Anmeldenummer: 94102450.7
(22) Anmeldetag: 18.02.1994
(51) Int. Cl.: F03B 3/14, F03B 13/10

(54) **Strömungsmaschine mit Verstellpropeller**

(30) Priorität: 27.02.1993 DE 4306131
(71) Anmelder: KSB Aktiengesellschaft, D-67227 Frankenthal (DE)
(72) Erfinder: Feldle, Günter, Dr., D-73760 Ostfildern (DE); Schaaf, Günter, D-28277 Bremen (DE); Schäfer, Horst, D-27404 Rhade (DE)

(57) **Zusammenfassung**

Die Erfindung betrifft eine Strömungsmaschine mit Verstellpropeller. Innerhalb der den Verstellpropeller tragenden Welle ist eine Verstellspindel (12) angeordnet. Die Verstellspindel ist mit einem Untersetzungsgetriebe (10) verbunden, welches im Stirnseitenbereich eines den Verstellpropeller antreibenden Motors bzw. angetriebenen Generators angebracht ist und mit einem Verstellmotor (5) zusammenwirkt.

## Beschreibung

Die Erfindung betrifft eine Strömungsmaschine gemäß dem Oberbegriff des Hauptanspruches.

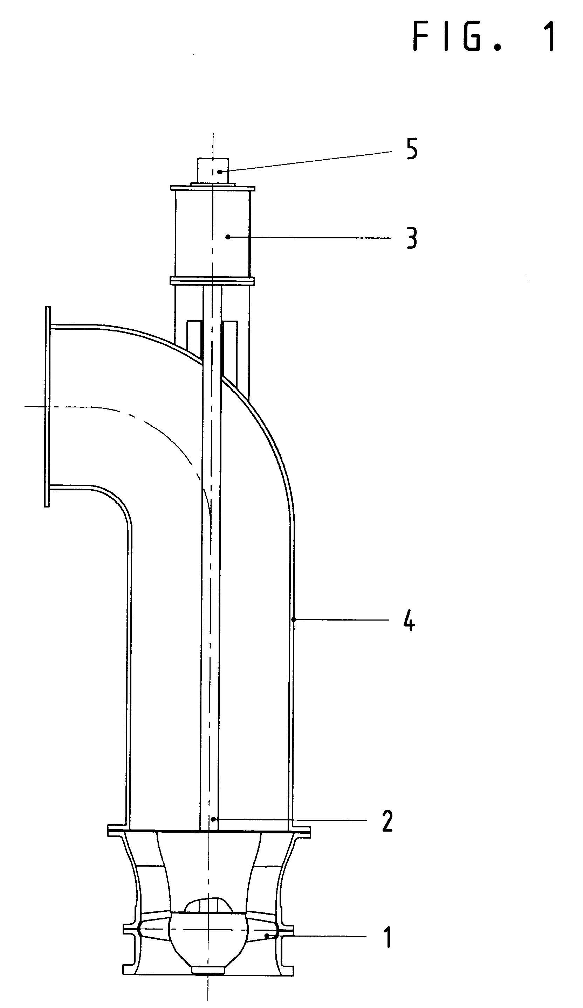

Auf dem Gebiet der Verstellpropeller von Strömungsmaschinen sind die vielfältigsten Lösungen bekannt. In einem Buch von Petermann, "Strömungsmaschinen", ist auf Seite 19, Abb. 1.2. 2.2 ein Verstellgetriebe einer Propellerpumpe veröffentlicht, welches eine hohle Antriebswelle zeigt, in der eine axial längs verschiebliche Verstellspindel die Kraft zu den Schaufeln im Propellerkopf überträgt. Das pumpenferne Ende der Antriebswelle verfügt über Schleifringkontakte, durch die elektrische Energie zu einem darin integrierten Elektromotor geführt werden kann. Der Elektromotor überträgt seine Drehzahl bzw. sein Drehmoment auf ein mit einer Spindelmutter verbundenes Untersetzungsgetriebe. Die Spindelmutter ist in dem Pumpenwellenende axial und radial gelagert und überträgt die Drehbewegung auf eine Verstellspindel. Diese Ausführungsform bedingt einen sehr hohen konstruktiven und baulichen Aufwand und weist den Nachteil auf, daß durch die Schleifringe eine Störstelle für die Übertragung elektrischen Stromes existiert.

Eine andere Lösung zeigt die JP 59-176 498. Die Welle ist hierbei geteilt ausgeführt, wobei anscheinend in einem trockenen Bereich der Welle ein elektrischer Verstellmechanismus integriert ist. Die geteilte Welle weist am propellerfernen Ende des ersten Wellenteiles eine Lagerung für den Rotor des elektrischen Stellantriebes auf. Die Lagerung des Rotors ist axial verschiebbar neben einem Kupplungsflansch angeordnet. Benachbart angeordnet ist ein Außengewinde, mit dem die Drehbewegung des Rotors in eine Axialverschiebung umgewandelt werden kann. Die Axialverschiebung des Rotors wirkt auf ein Joch, das sich innerhalb der Kupplung der zweiteiligen Welle befindet und Axialkräfte auf eine Schubstange innerhalb des ersten Wellenteiles überträgt. Aufgrund eines überdimensional langen Statorteiles sowie des mit dem Rotor zusammenwirkenden Gewindes bewegt sich der Rotor innerhalb des Stators in axialer Richtung und erzeugt Verstellkräfte. Diese Lösung ist jedoch sehr aufwendig konstruiert und weist hohe elektrische Verluste auf. Geringste äußere Einflüsse, wie Schmutz und dgl., können diesen Verstellmechanismus in seiner Funktion gefährden, weil die Dichtspaltdurchmesser teilweise auf großen Durchmessern angeordnet sind.

Der Erfindung liegt das Problem zugrunde, für einen Verstellpropeller einen zuverlässigen, wenig aufwendigen elektrischen Verstellantrieb zu entwickeln, der eine kleine Bauform aufweist und gegebenenfalls auch einen Einsatz innerhalb von tauchbaren Strömungsmaschinenaggregaten zuläßt.

Die Lösung dieses Problems erfolgt gemäß dem kennzeichnenden Teil des Anspruches 1. Für den stillstehend montierten Verstellmotor kann ein handelsüblicher, schnellaufender kleiner Normmotor Verwendung finden. Hierbei handelt es sich um ein ausgereiftes und kostengünstiges Produkt. Beispielsweise bei einem Tauchmotorpumpenaggregat läßt sich der Verstellmotor problemlos in das ohnehin flüssigkeitsdicht ausgebildete propellerferne Ende des Motorgehäuses einbauen. Da sich in diesem Bereich üblicherweise auch die Kabeleinführung für die elektrischen Versorgungskabel befinden, ist auch eine unproblematische elektrische Installation gewährleistet. Die Ausfallsicherheit der Verstelleinrichtung kann somit um ein Vielfaches erhöht werden. Diese Lösung kann auch, wie eine Ausgestaltung zeigt, nachträglich in eine bestehende Baureihe integriert werden.

Durch Zwischenschaltung eines Adaptergehäuses ist ein darin anbringbarer Verstellmotor an dem Motor oder Generator einfach anflanschbar. Im Anschluß daran kann dann wieder das Gehäuse für die elektrischen Anschlüsse angeordnet sein. Die Verbindung dieses Verstellmotors mit einem ebenfalls handelsüblichen und bewährten Untersetzungsgetriebe ermöglicht in einfacher Weise eine Drehzahlreduzierung. Die für einen Verstellmechanismus eventuell notwendige niedrige Drehzahl der Verstellspindel läßt sich somit in einfachster Weise übertragen. Durch den Verwendung findenden Normmotor als Verstellmotor ergibt sich zusätzlich der Vorteil einer weltweiten Verfügbarkeit. Zudem kann diese Lösung auch während des Stillstandes der Strömungsmaschine eine Verstellung der Schaufeln gewährleisten.

Die Ausgestaltung gemäß Anspruch 2 beschreibt eine Ankoppelung eines Untersetzungsgetriebes üblicher Bauart an den standardisierten Verstellmotor bei einer Anordnung am propellerfernen Motor- oder Generatorteil. Das damit verbundene Wellenteil sowie die Rotorwelle des Motors oder Generators selbst sind hohl ausgebildet, um darin die Verstellspindel für den Verstellpropeller aufzunehmen.

Diese Lösung erlaubt eine sehr gute Zugänglichkeit zum Verstellmotor und dem Untersetzungsgetriebe. Da jedoch bei dieser Anordnung die kräftig dimensionierte Verstellspindel auch durch den Rotor des Motors oder Generators geführt wird, empfiehlt sich diese Anordnung für groß dimensionierte Strömungsmaschinenantriebe.

Etwas anders verhält es sich mit einer anderen Ausgestaltung. Diese sieht vor, daß das Untersetzungsgetriebe am propellernahen Ende des Motors oder des Generators angeordnet ist, daß der am propellerfernen Ende des Motors oder des Generators angebrachte Verstellmotor durch eine innerhalb der hohlen Rotorwelle befindliche Antriebswelle mit dem Getriebeeingang verbunden ist und der Getriebeausgang mit einer Verstellspindel verbunden ist. Diese Lösung bedingt zwar einen etwas größeren Aufwand im Bereich des Propellerwellenteiles, da dieser für die Aufnahme eines Untersetzungsgetriebes zwecks Drehzahlsenkung des Verstellmotors auszurüsten ist. Diese Bauart ermöglicht aber die Anwendung einer Rotorwelle, die nur eine kleine Hohlbohrung zur Aufnahme einer dünnen Antriebswelle vorsieht. Diese Lösung eignet sich ebenfalls für den Einsatz von tauchbaren Aggregaten. Häufig findet dabei ein Antriebskonzept Anwendung, bei dem ein schnelldrehender Motor mit Hilfe eines nachgeordneten Getriebes für eine geringe Wellendrehzahl sorgt. In umgekehrter Weise gilt dies für Turbinen. In derartigen Fällen ist das Getriebe ebenfalls mit einem Hohlwellenteil zur Durchführung der dünnen Antriebswelle versehen. Wenn die zu übertragenden Drehmomente es zulassen, dann kann durch das Getriebe auch eine dickere Verstellspindel hindurchgeführt werden.

In vorteilhafter Weise sieht eine weitere Ausgestaltung der Erfindung vor, daß das Untersetzungsgetriebe innerhalb eines Flansches der Welle gelagert ist. Bezüglich der Anwendung findenden Untersetzungsgetriebe besteht keine Beschränkung. Aus Platzgründen werden jedoch kleine Abmessungen aufweisenden Ausführungsformen bevorzugt.

Anstelle des Untersetzungsgetriebes kann der Motor auch direkt auf eine Verstellspindel einwirken, muß dann aber in langsamdrehender Bauart ausgebildet sein und über die Möglichkeit zur Drehrichtungsumkehr verfügen.

Grundsätzlich gilt für die Auslegung des Verstellmotors, daß zwei Auslegungsarten möglich sind. Der Verstellmotor müßte während des Betriebes bremsbar sein und eine, bezogen auf die gleiche Drehrichtung, größere Drehzahl als die Welle aufweisen. Mittels dieser Maßnahmen sind Relativbewegungen der Verstellspindel zur Welle möglich und damit eine Verstellfunktion durchführbar.

Die andere Möglichkeit sieht einen Verstellmotor vor, der mindestens zwei Drehzahlen aufweist, die in bezug auf die Wellendrehzahl schneller oder langsamer sind. Auch damit kann eine Relativbewegung der Spindel erzeugt werden, um einen Verstellmechanismus der Schaufeln zu betätigen.

Für denjenigen Fall, daß ein Verstellmotor mit gleichen Drehzahlen, aber zwei verschiedenen Drehrichtungen Anwendung findet, kann für eine Drehrichtung ein zusätzliches Untersetzungsgetriebe Verwendung finden, um annähernd gleiche Drehzahlen für einen Verstellmechanismus zu erhalten, falls dies für den jeweiligen Verwendungsfall notwendig sein sollte.

Auch ist es möglich, einen Verstellmotor intermittierend zu betreiben. Durch kurzfristige Inbetriebnahmen können genaue Schaufelpositionen erreicht werden.

Ausführungsbeispiele der Erfindung sind in den Zeichnungen dargestellt und werden im folgenden näher beschrieben. Es zeigen die
- Fig. 1 und 2: schematische Darstellungen der damit ausrüstbaren Strömungsmaschinentypen,
- Fig. 3 und 4: am Beispiel eines Tauchmotorpumpenaggregates zwei verschiedene Anordnungen eines Untersetzungsgetriebes.

In der Fig. 1 ist eine Strömungsmaschine mit Verstellpropeller gezeigt. Hierbei kann es sich, je nach Durchströmrichtung, um eine Turbine oder um eine Pumpe, eine sogenannte Rohrgehäusepumpe handeln. Ein den Verstellpropeller 1 mittels einer Welle 2 antreibender Motor 3 bzw. davon angetriebener Generator 3 befindet sich außerhalb des Fördermediums. Die Welle 2 muß hierbei durch das Gehäuse 4 hindurchgeführt werden. Ein Verstellmotor 5 befindet sich am pumpenfernen Ende des Motors/Generators 3 und ist in einfacher Weise an dessen Gehäuse befestigt.

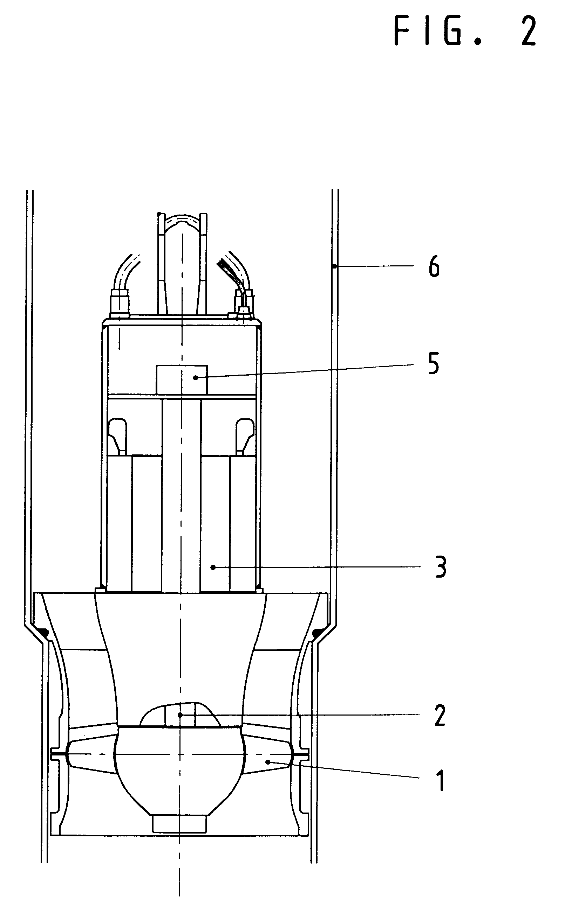

Die in Fig. 2 gezeigte Strömungsmaschine mit Verstellpropeller entspricht beispielhaft einer Tauchmotorpumpe. Hierbei ist der Motor 3 gewissermaßen neben dem Verstellpropeller 1 angeordnet. Der Motor befindet sich dabei innerhalb des Fördermediums und die Welle 2 weist nur eine kurze Baulänge auf. Diese Bauform hat den Vorteil, daß das gesamte Aggregat in kostengünstiger Weise direkt in einen Schacht 6 absenkbar ist. Der Verstellmotor 5 befindet sich hierbei innerhalb des Gehäuses des Motors 3. Bei Strömungsumkehr kann es sich um ein Turbinenaggregat handeln.

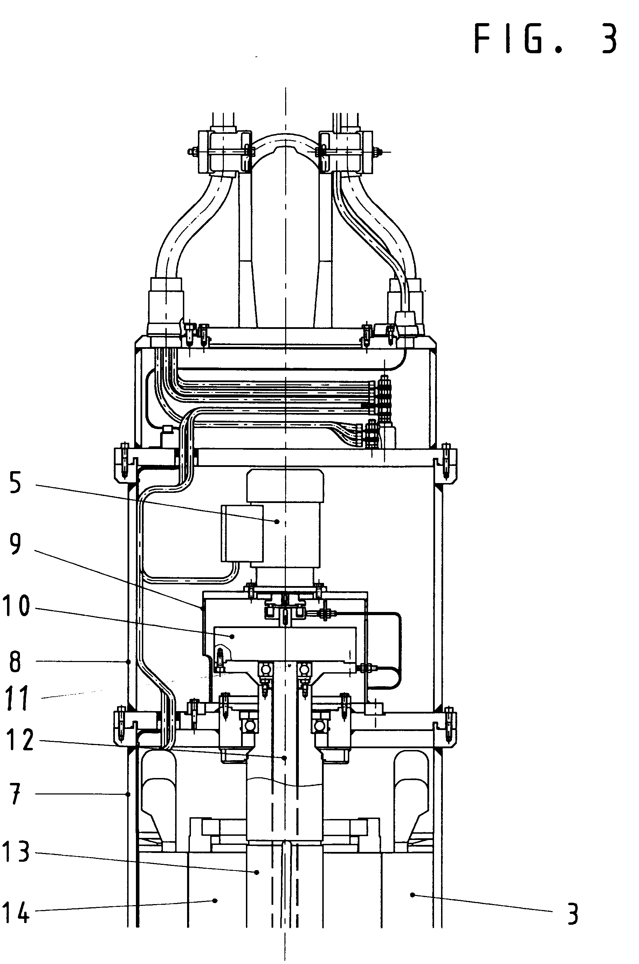

In Fig. 3 ist am Beispiel eines tauchbaren Aggregates ein Ausschnitt aus einem Gehäuse 7 des Motors/Generators 3 gezeigt. Dessen Gehäuse 7 ist ein Adaptergehäuse 8 nachgeordnet, innerhalb dessen der Verstellmotor 5 auf einer Laterne 9 befestigt ist. Der Verstellmotor 5 ist mit einem Untersetzungsgetriebe 10 gekoppelt, mit dessen Hilfe seine hohe Drehzahl in eine niedrige Drehzahl mit hohem Verstellmoment umgewandelt wird. Als Untersetzungsgetriebe können bekannte Bauarten wie Cyklo-, Gleitkeil-, Planetengetriebe und ähnliche Bauformen Verwendung finden. Der Ausgang 11 des Getriebes 10 ist mit einer Verstellspindel 12 verbunden, die das Verstellmoment zu dem - hier nicht gezeigten - Verstellpropeller 1 überträgt. Dazu ist die Welle 13 des Rotors 14 des Motors/Generators 3 hohl ausgebildet. Der Motor 3 selbst kann als Langsamläufer, die hohle Welle direkt antreibender Motor ausgebildet sein. Oder es kann sich um einen Schnelläufer handeln, der mit Hilfe eines anderen Untersetzungsgetriebes die hohl ausgebildete Welle indirekt antreibt.

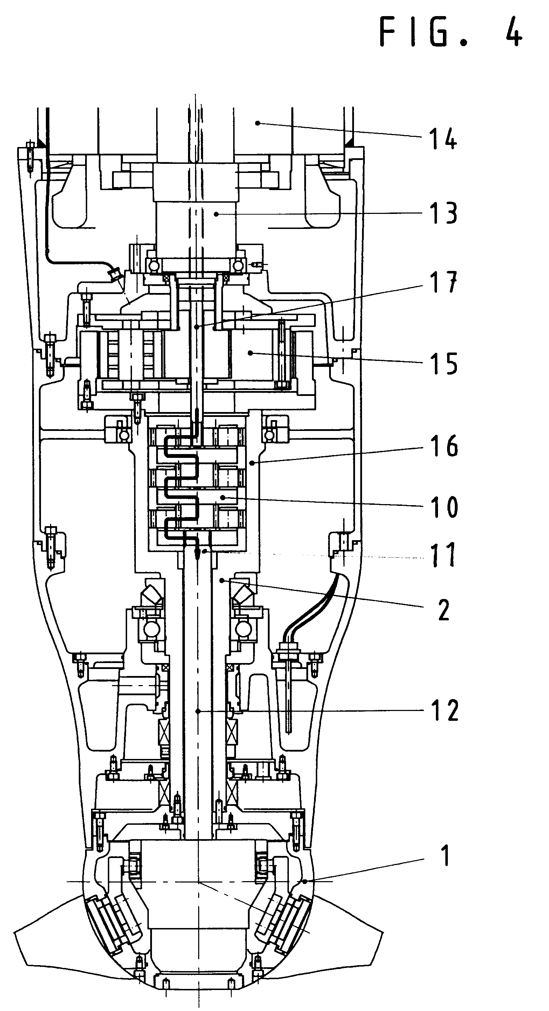

Ein Beispiel für die letztgenannte Ausführungsform ist in Fig. 4 gezeigt. Hierbei ist die Welle 13 des Rotors 14 mit einem Untersetzungsgetriebe 15 verbunden, an dessen Ausgang die Welle 2 angeflanscht ist. Der Flansch 16 der Welle 2 ist hohl und bildet gleichzeitig die Aufnahme für das Untersetzungsgetriebe 10 der Verstelleinrichtung. Gezeigt ist hier ein mehrstufiges Planetengetriebe, wobei selbstverständlich auch andere Bauformen Verwendung finden können.

Vom Untersetzungsgetriebe 10 erstreckt sich die Verstellspindel 12 durch die hohle Welle 2 zum Verstellpropeller 1. Die Kraftübertragung von dem in Fig. 3 gezeigten Verstellmotor 5 erfolgt direkt durch die hohle Welle 13 des Rotors 14 mittels einer dünnen Antriebswelle 17. Diese erstreckt sich auch durch das Untersetzungsgetriebe 15 der Welle 2.

## Patentansprüche

1. Strömungsmaschine mit Verstellpropeller axialer oder halbaxialer Bauart, wobei innerhalb des Verstellpropellers und in der Welle eine Verstellspindel zum Antrieb eines Verstellmechanismus angeordnet ist, **dadurch gekennzeichnet**, daß
- ein mit dem Verstellpropeller (1) verbundener Motor oder Generator (3) eine hohle Rotorwelle (13) aufweist,
- daß am propellerfernen Ende des Motors oder des Generators (3) ein trocken aufgestellter Verstellmotor (5) angeordnet ist, der
- mit einem im Bereich eines Motor- oder Generatorendes angeordneten Untersetzungsgetriebes (10) des Verstellpropellers (1) verbunden ist,
- wobei innerhalb der hohlen Rotorwelle (13) eine Verstellspindel (12) oder eine Antriebswelle (17) des Untersetzungsgetriebes (10) angeordnet ist.

2. Strömungsmaschine nach Anspruch 1, dadurch gekennzeichnet, daß das Untersetzungsgetriebe (10) am propellerfernen Teil des Motors oder des Generators (3) angeordnet ist, wobei der Getriebeeingang mit dem Verstellmotor (5) und der Getriebeausgang mit einer Verstellspindel (12) verbunden ist.

3. Strömungsmaschine nach Anspruch 1, dadurch gekennzeichnet, daß das Untersetzungsgetriebe (10) am propellernahen Ende des Motors oder des Generators (3) angeordnet ist, daß der am propellerfernen Ende des Motors oder des Generators (3) angebrachte Verstellmotor (5) durch eine innerhalb der hohlen Rotorwelle (13) befindliche Antriebswelle (17) mit dem Getriebeeingang verbunden ist und der Getriebeausgang (11) mit einer Verstellspindel (12) verbunden ist.

4. Strömungsmaschine nach Anspruch 3, dadurch gekennzeichnet, daß das Untersetzungsgetriebe (10) innerhalb eines Flansches (16) der Welle (2) gelagert ist.

5. Strömungsmaschine nach einem der Ansprüche 1 bis 4, dadurch gekennzeichnet, daß der Verstellmotor (5) und ein eventuell daran angeflanschtes Untersetzungsgetriebe (10) innerhalb eines am propellerfernen Motorende angeordneten Adaptergehäuses (8) angebracht sind.
